# EUROPEAN PATENT SPECIFICATION

(11) **EP 0 596 801 B1**
(45) Date of publication and mention of the grant of the patent: **06.05.1998**
(21) Application number: 93402702.0
(22) Date of filing: 04.11.1993
(51) Int. Cl.: C01B 31/00, C02F 1/28, C09K 3/32

(54) **Expandable graphite compositions for absorption of liquids and method for the manufacture thereof**
Expandierbare Graphit-Zusammensetzungen zur Absorption von Flüssigkeiten sowie Verfahren zu deren Herstellung
Compositions de graphite expansible pour l'absorption de liquides et leur procédé de fabrication

(30) Priority: 04.11.1992 IS 103641
(43) Date of publication of application: 11.05.1994
(73) Proprietor: ENVIRONMENTAL SYSTEMS Ltd., Haifa 32000 (IL)
(72) Inventor: Sandbank, Enrico, Haifa (IL); Maryasin, Ilya, Jerusalem (IL); Shelef, Gedaliah, Haifa (IL)
(74) Representative: Portal, Gérard

(56) References cited:
- EP-A- 0 435 766
- US-A- 3 357 929
- CHEMICAL ABSTRACTS, vol. 110, no. 20, 15 May 1989, Columbus, Ohio, US; abstract no. 176035u, page 163 ; & KHIM. TVERD. TOPL. (MOSCOW), no.1, 1989 pages 126 - 130 V. SHAPRANOV ET AL.

## Description

The present invention relates to a novel structural form of expanded graphite. More particularly, the invention relates to a novel structural form of expanded graphite absorbing large amounts of liquid materials and possesses improved properties of storage and transport.

### BACKGROUND OF THE INVENTION

Expanded graphite is well known as an absorbing agent for petroleum products from water media. Thus, according to the U.S. patent number 3,357,929, a vermicular expanded graphite is claimed as a sorption agent of liquid materials, including acetone, kerosene, etc. The expanded graphite is obtained from flake graphite treated with a mixture of concentrated sulfuric and nitric acids and heated at a temperature of about 1000°C. One of the advantages of the vermicular expanded graphite as a solid sorption agent is that it is easily compressed under relatively low pressure, being not friable, and thus by simply compressing the expanded graphite it is capable of releasing the sorbed liquid in an uncontaminated manner.
According to C.A:110, 159373k, expanded graphite is produced by treating powder graphite with an expanding agent and further subjected to an electromagnetically induced heat treatment to expand the formed intercalation graphite compound.
According to C.A.110, 176935u, vermicular graphite is obtained from fine-crystal graphite of brand GL-1 by oxidation with CrO₃ in concentrated H₂SO₄ followed by neutralization with MgO. The expansion degree of VG after heating at 1280°C was determined as a function of oxidation conditions and storage. The VG is disclosed to be used for steel bottom casting.
In our previous U.S. Patent 5,282,975 (= EP-A-0,435,766) just granted a particular structure of expanded graphite was described. The expanded graphite was characterized by the following specific properties:
- a specific density in the range of 3 to 100 g/l;
- a surface area in the range of 50-200 m²/g; and
- closed pores of the particles in the range of 3% to 20%.

Due to the above properties and especially to the low range of closed pores, the expanded graphite was found to absorb relatively large amounts of petroleum products.

It is known that the absorption capacity of expanded graphite depends on its bulk density; a lower bulk density will possess a higher absorption capacity.

One of the main disadvantage of the known expanded and/or vermicular graphite to be used as an absorbent for petroleum products, is its low bulk density and accordingly large volume of material is necessary, which requires a large number of haulage workers in addition to the environmental problems. Thus for instance, in the above U.S. patent the bulk density is in the range of 2 to 10 g/l, which is indeed very low and will cause severe problems in its storage and transportation. Particularly, in these days, when the environmental demands are more and more stringent, the above disadvantage might avoid its use for absorption of petroleum products. It is now universally recognized that inhalation of certain dusts of graphite is detrimental to health and may lead to reticulation of the lungs and eventually to fatal diseases included under the term pneumoconiosis.

It is an object of the present invention to provide a novel structural form of expanded graphite. It is another object of the present invention, to provide a novel structural form of expanded graphite which possesses a relatively high bulk density. It is yet another object of the present invention, to provide a novel structural form of expanded graphite which possesses the property of absorbing large amounts of liquid material. It is a further object of the present invention to provide a novel structural form of expanded graphite which may be produced at-site thus avoiding problems of storage and transportation.

### BRIEF DESCRIPTION OF THE INVENTION

According to a first aspect, the invention relates to a novel structural form of expanded graphite which possesses a relatively high bulk density of at least 3 g/ml, and contains magnesium ions, which may be prepared by a process comprising the steps of:
(a) treating a natural graphite with a mixture of concentrated solutions of nitric acid and sulfuric acid;
(b) washing the treated graphite with an aqueous solution containing magnesium ions; and
(c) expanding the treated graphite resulted in step (b) by a thermal treatment at a temperature of at least 1200°C.

The expanded graphite produced has a high bulk density which is much superior to that of known expanded graphite so that no storage and transport ecological problems are involved. It was surprisingly found that the product obtained containing a magnesium ion, in spite of its higher bulk density, has a higher absorption capacity of liquid materials than the expanded graphite described in the prior art. Among the liquid materials which can be absorbed by the novel structural form of expanded graphite the following are mentioned: petroleum products, strong mineral acids and organic compounds dissolved in solutions of petroleum derivatives.

According to a preferred feature, the expanded graphite of the invention has a content in magnesium ions of at least 3% and preferably is ranging between 3% and 30% expressed in weight of magnesium ions with regard to the weight of expanded graphite.

Furthermore, the bulk density of the expanded graphite of the invention is of at least 3g/ml. This bulk density of at least 3g/ml does constitute a relatively high bulk density from which the advantages of the invention are obtained. From this lower limit, the bulk density may vary in large limits. Accordingly, there is no critical upper limit.

According to another particular embodiment, in step (a), the volume ratio between the acids is between 4 sulfuric acid to 1 nitric acid.

According to another particular embodiment, in step (b), said washing is carried out by a solution of magnesium ions, preferably magnesium sulfate, most preferably in a concentration range of 10% to 35% by weight.

According to a preferred feature, after washing, the treated graphite has a pH in the range of 6.5 to 6.9.

According to a further preferred embodiment, in step (c), the thermal treatment is carried out at a temperature of about 1600°C.

According to another specific preferred embodiment, the thermal treatment is carried out in a flame resulting from a mixture of oxygen and butane. Preferably, the expanded graphite is produced **in-situ** near the envisaged area for its direct use. Most preferably, said expanded graphite is spread by the combustion gases onto the desired surface containing the liquid to be absorbed.

According to a second aspect, the invention relates to a process of preparation of expanded graphite having a relatively high bulk density of at least 3 g/ml and containing magnesium ions, comprising the steps of:
(a) treating a natural graphite with a mixture of concentrate solutions of nitric acid and sulfuric acid,
(b) washing the treated graphite with an aqueous solution containing magnesium ions, and
(c) expanding the treated graphite resulted in step (b) by a thermal treatment at a temperature of at least 1200°C.

According to a first preferred process embodiment, in step (a) the volume ratio between the acids is between 4 sulfuric acid to 1 nitric acid.

According to another advantageous embodiment, in step (a) a small amount of an inorganic oxidizing agent is incorporated, preferably chromium oxide.

According to another preferred embodiment, in step (b), said washing is carried out by a solution of magnesium ions, the most preferred species being the use of magnesium ions under the form of magnesium salts, most preferably magnesium sulfate, which has preferably a concentration in the range of 10% to 35% by weight.

According to another particularly advantageous embodiment, after washing the treated graphite has a pH in the range of 6.5 to 6.9.

According to another preferred embodiment, in step (c) the thermal treatment is carried out at a temperature of at least 1200°C, and preferably at about 1600°C.

According to another preferred feature said thermal treatment is carried out in a flame resulting from a mixture of oxygen and butane.

In another preferred embodiment, said expanded graphite is produced in-situ near the envisaged area for its direct use and preferably spread by the combustion gases onto the desired surfaces containing the liquid to be absorbed.

According to a third aspect the invention relates to the use of the expanded graphite as defined above or obtained by the above process, in the form of granules, of a filter medium, notably for absorbing petroleum products from water or solid surfaces, mineral acids from a liquid or solid surface.

### DETAILED DESCRIPTION OF THE INVENTION

The broad aspects and embodiments of the invention have been set forth above. A more detailed description of the invention is set forth herebelow with regard to the process of preparation of the expanded graphite, with respect to the expanded graphite itself, and with its use.

The first step consists in the treatment of the graphite, in the form of lump or natural crystalline flake, with a mixture of concentrated solutions of nitric acid and sulfuric acid. The ratio between sulfuric acid and nitric acid may be selected in a broad range, a preferred volume ratio between the acids being between 4 sulfuric to 1 nitric. This treatment is generally carried out at room temperature for a short period, in the order of a few minutes. Optionally, a small amount of an additional inorganic oxidizing reagent, such as chromium oxide, may be added during this treatment.

In the second step, the treated graphite is washed by an aqueous solution having a pH slightly above 7 containing magnesium ions and most preferred are those containing magnesium sulfate, the washing being continued until the acids are substantially removed and a slightly acidic pH in the range of 6 to 6.9 is reached.

Preferred concentrations of the washing solutions, with a magnesium sulfate as main constituent are those in the range of 10% to 35% by weight. Instead of a solution of magnesium sulfate, it is also possible to use any brine containing magnesium ions or even sea-water, keeping in mind that a higher alkalinity will decrease the amounts of aqueous solutions to be used for washing.

In the last step, the above treated graphite is heated at a temperature of at least 1200°C and preferably at about 1600°C. The easiest way to heat the treated graphite, is by its burning in a flame resulting from a mixture of oxygen and butane.

The expanded graphite of the invention has advantageously a content in magnesium ions comprised between 3% and 30% by weight.

Furthermore the bulk density of the expanded graphite of the invention is at least 3g/ml.

According to a most preferred embodiment, the novel form of expanded graphite is produced at site, near the envisaged place for its direct use, wherein the treated graphite, is heated at a temperature above 1200°C, producing the expanded structure of graphite. An advantage of this embodiment using a flame of a liquid or gaseous fuel, will enable at the same time to spread the expanded graphite by the combustion gases onto the desired surface where it has to absorb the liquid material.

The expanded graphite according to the present invention is most useful for absorption of petroleum products from water surfaces, such as oceans, seas, lakes or rivers, due to any spillages from tankers conveying such materials.

In addition to the above property, the expanded graphite absorbs only a small amount of water, floating on the surface.

The petrol from the loaded expanded graphite can be easily removed by mechanical means and even by squeezing.

In case that a complete recovery is required, such as for an expensive liquid, one may even conceive to use a solvent extraction operation.

In addition to the above use, the expanded graphite may be used for a large number of other uses, such as:
removal of oils from industrial waste water, removal of oils from emulsions,
removal of oils from a solid surface such as roads, removal of mineral acids,etc.

The expanded graphite can be spread on the surface of the water in the form of granules, or any other particulate form. It can also be used in pillows, blankets or booms which are permeable to water and contain the expanded graphite particles.

The expanded graphite according to the present invention may also be utilized as a filter medium. This filter medium can be obtained by a slight pressing the particles of expanded graphite at a pressure of about 5 kg/sq.cm into a layered sheet.

The invention will be hereafter illustrated by a number of Examples, being understood that no limitation should be deduced therefrom, the Examples being presented only for a better understanding of the invention as given in the above description and covered by the appended claims. In the Examples, the concentrations are given by weight, unless otherwise mentioned.

### EXAMPLE 1

Flakes of natural graphite having a particles size in the range of between 0.3 to 0.8 mm, were treated at room temperature with a mixture of concentrated sulfuric acid (96%) and nitric acid (60%), at a volume ratio of 4 : 1.

The above treated graphite particles were filtered out and washed until a pH of 6.5 was obtained using the following solutions:
(a) tap water;
(b) an aqueous solution of magnesium sulfate (16%);
(c) an aqueous solution of magnesium sulfate (20 %) and
(d) a solution of sea water.

The washed treated flakes were dried and heated in a flame produced by a mixture of oxygen-butane, at a temperature of 1600°C for about 10 minutes.

An amount of 100 g of the resulted washed expanded graphite particles, were used for absorption of kerosene and the following results were obtained:

| Solution used in washing | Volume of washing (l) | Weight increase of graphite (%) | Bulk density (g/ml) | Kerosene sorbed (g/g) |
|---|---|---|---|---|
| tap water | 5.0 | 0 | 3.75 | 33.7 |
| MgSO₄ 16% | 2.5 | 38.5 | 5.6 | 59.3 |
| MgSO₄ 20% | 2.5 | 50.0 | 6.0 | 61.2 |
| Sea water | 3.5 | 33.5 | 5.25 | 53.7 |

The magnesium content of the expanded graphite is of about 10% by weight.

### EXAMPLE 2

The same graphite flakes as in Example 1, were treated with the same mixture of acids and neutralized by a slurry of magnesium hydroxide to a full neutralization and further washed by tap water.

The resulted mixture was thermally treated as in Example 1 and the following results were obtained.

| Volume of tap water used (l) | Bulk density (g/ml) | Kerosene sorbed (g/g) |
|---|---|---|
| 2.5 | 3.75 | 54.3 |

The magnesium content of the expanded graphite is of about 12% by weight.

### EXAMPLE 3

Flakes of a commercially available graphite were treated as in Example 1, with a mixture of acids, washed with various aqueous solutions and thermally treated.

The resulted products gave the following results:

| Solution used in washing | Volume of washing (l) | Bulk density (g/l) | Weight increase of graphite (%) | Kerosene sorbed (g/g) |
|---|---|---|---|---|
| tap water | 5.0 | 4.1 | - | 31.1 |
| Sea water | 3.5 | 3.75 | 18.7 | 38.6 |
| MgSO₄ 4% | 3.2 | 4.7 | 27.3 | 44.1 |
| MgSO₄ 8% | 3.2 | 4.25 | 32.6 | 53.3 |

The magnesium content of the expanded graphite is of about 18% by weight.

### EXAMPLE 4

The product obtained in Example 1, after washing with the solution of 20% MgSO₄ and thermally treated, was used for absorbing different mineral acids and the results expressed in g sorbed of mineral acid per g of the expanded graphite were as follows:

| The mineral acid | Sorption capacity (g/g) |
|---|---|
| Sulfuric acid (98%) | 104.0 |
| Phosphoric acid (65%) | 67.3 |
| Hydrochloric acid (33%) | 24.8 |

## Claims

1. A novel structural form of expanded graphite which possesses a relatively high bulk density of at least 3 g/ml and contains magnesium ions, which may be prepared by a process comprising the steps of:
(a) treating a natural graphite with a mixture of concentrated solutions of nitric acid and sulfuric acid,
(b) washing the treated graphite with an aqueous solution containing magnesium ions, and
(c) expanding the treated graphite resulted in step (b) by a thermal treatment at a temperature of at least 1200°C.

2. An expanded graphite according to claim 1, wherein the content in magnesium ions is at least 3% and preferably ranges between 3 % and 30 % expressed in weight of magnesium ions with regard to the weight of expanded graphite.

3. The expanded graphite according to anyone of claims 1 to 2 wherein in step (a) the volume ratio between the acids is 4 sulfuric acid to 1 nitric acid.

4. The expanded graphite according to anyone of claims 1 to 3 wherein in step (a) a small amount of an inorganic oxidizing agent is incorporated.

5. The expanded graphite of claim 4, wherein the inorganic oxidizing agent is chromium oxide.

6. The expanded graphite according to anyone of claims 1 to 5 wherein in step (b) said washing is carried out by a solution of magnesium ions, preferably magnesium sulfate, in a concentration range of 10% to 35% by weight.

7. The expanded graphite according to anyone of claims 1 to 6 wherein after washing the treated graphite has a pH in the range of 6.5 to 6.9.

8. The expanded graphite according to anyone of claims 1 to 7 wherein in step (c) the thermal treatment is carried out at a temperature of about 1600°C.

9. The expanded graphite according to claim 8 wherein said thermal treatment is carried out in a flame resulting from a mixture of oxygen and butane.

10. The expanded graphite according to any one of claims 1 to 9, which is produced in situ near the envisaged area for its direct use.

11. A process of preparation of expanded graphite having a relatively high bulk density of at least 3 g/ml and containing magnesium ions, comprising the steps of:
(a) treating a natural graphite with a mixture of concentrate solutions of nitric acid and sulfuric acid,
(b) washing the treated graphite with an aqueous solution containing magnesium ions, and
(c) expanding the treated graphite resulted in step (b) by a thermal treatment at a temperature of at least 1200°C.

12. The process of claim 11 wherein, in step (a) the volume ratio between the acids is 4 sulfuric acid to 1 nitric acid.

13. The process of claim 11 or 12, wherein in step (a) a small amount of an inorganic oxidizing agent is incorporated.

14. The process of claim 13 wherein the inorganic oxidizing agent is chromium oxide.

15. The process according to anyone of claims 11 to 14, wherein in step (b) said washing is carried out by a solution of magnesium ions, preferably magnesium sulfate, in a concentration range of 10% to 35% by weight.

16. The process according to anyone of claims 11 to 15, wherein after washing the treated graphite has a pH in the range of 6.5 to 6.9.

17. The process according to anyone of claims 11 to 16, wherein in step (c) the thermal treatment is carried out at a temperature of about 1600°C.

18. The process according to anyone of claims 12 to 17, wherein said thermal treatment is carried out in a flame resulting from a mixture of oxygen and butane.

19. The process according to anyone of claims 12 to 18, wherein said expanded graphite is produced in-situ near the envisaged area for its direct use and preferably is spread by the combustion gases onto the desired surface containing the liquid to be absorbed.

20. Use of the expanded graphite as defined in anyone of claims 1 to 10, or as prepared according to the process according to anyone of claims 11 to 19 in the form of granules, of a filter medium, notably for absorbing petroleum products from water or solid surfaces, mineral acids from a liquid or solid surface.

21. Use of the expanded graphite according to claim 20 wherein said expanded graphite is spread by the combustion gases onto the desired surface containing the liquid to be absorbed.

## Patentansprüche

1. Neue Strukturform von expandiertem Graphit, der eine relativ hohen Schüttdichte von zumindest 3 g/ml aufweist und Magnesiumionen enthält, welche Strukturform hergestellt werden kann durch ein Verfahren, das die Schritte umfaßt:
(a) Behandeln eines natürlichen Graphits mit einer Mischung konzentrierter Lösungen von Salpetersäure und Schwefelsäure,
(b) Waschen des behandelten Graphits mit einer Magnesiumionen enthaltenden wässerigen Lösung, und
(c) Expandieren des in Schritt (b) erhaltenen behandelten Graphits durch eine Wärmebehandlung bei einer Temperatur von zumindest 1200°C.

2. Expandierter Graphit nach Anspruch 1, worin der Gehalt an Magnesiumionen zumindest 3 % beträgt und vorzugsweise im Bereich zwischen 3 % und 30 %, ausgedrückt als Masse von Magnesiumionen bezogen auf die Masse von expandiertem Graphit, liegt.

3. Expandierter Graphit nach einem der Ansprüche 1 oder 2, wobei in Schritt (a) das Volumenverhältnis zwischen den Säuren 4 Schwefelsäure zu 1 Salpetersäure beträgt.

4. Expandierter Graphit nach einem der Ansprüche 1 bis 3, wobei in Schritt (a) eine geringe Menge eines anorganischen Oxidationsmittels eingeschlossen wird.

5. Expandierter Graphit nach Anspruch 4, wobei das anorganische Oxidationsmittel Chromoxid ist.

6. Expandierter Graphit nach einem der Ansprüche 1 bis 5, wobei in Schritt (b) das Waschen mit einer Lösung von Magnesiumionen, vorzugsweise Magnesiumsulfat, in einem Konzentrationsbereich von 10 Masse-% bis 35 Masse-% durchgeführt wird.

7. Expandierter Graphit nach einem der Ansprüche 1 bis 6, wobei nach dem Waschen der behandelte Graphit einen pH im Bereich von 6,5 bis 6,9 aufweist.

8. Expandierter Graphit nach einem der Ansprüche 1 bis 7, wobei in Schritt (c) die Wärmebehandlung bei einer Temperatur von etwa 1600°C durchgeführt wird.

9. Expandierter Graphit nach Anspruch 8, wobei die Wärmebehandlung in einer durch eine Mischung von Sauerstoff und Butan erzeugten Flamme durchgeführt wird.

10. Expandierter Graphit nach einem der Ansprüche 1 bis 9, welcher in situ in der Nähe des für seine direkte Verwendung vorgesehenen Ortes erzeugt wird.

11. Verfahren zur Herstellung von expandiertem Graphit, der eine relativ hohe Schüttdichte von zumindest 3 g/ml aufweist und Magnesiumionen enthält, welches Verfahren die Schritte umfaßt:
(a) Behandeln eines natürlichen Graphits mit einer Mischung konzentrierter Lösungen von Salpetersäure und Schwefelsäure,
(b) Waschen des behandelten Graphits mit einer Magnesiumionen enthaltenden wässerigen Lösung, und
(c) Expandieren des in Schritt (b) erhaltenen behandelten Graphits durch eine Wärmebehandlung bei einer Temperatur von zumindest 1200°C.

12. Verfahren nach Anspruch 11, bei welchem in Schritt (a) das Volumenverhältnis zwischen den Säuren 4 Schwefelsäure zu 1 Salpetersäure beträgt.

13. Verfahren nach Anspruch 11 oder 12, bei welchem in Schritt (a) eine geringe Menge eines anorganischen Oxidationsmittels eingeschlossen wird.

14. Verfahren nach Anspruch 13, bei welchem das anorganische Oxidationsmittel Chromoxid ist.

15. Verfahren nach einem der Ansprüche 11 bis 14, bei welchem in Schritt (b) das Waschen mit einer Lösung von Magnesiumionen, vorzugsweise Magnesiumsulfat, in einem Konzentrationsbereich von 10 Masse-% bis 35 Masse-% durchgeführt wird.

16. Verfahren nach einem der Ansprüche 11 bis 15, bei welchem nach dem Waschen der behandelte Graphit einen pH im Bereich von 6,5 bis 6,9 aufweist.

17. Verfahren nach einem der Ansprüche 11 bis 16, bei welchem in Schritt (c) die Wärmebehandlung bei einer Temperatur von etwa 1600°C durchgeführt wird.

18. Verfahren nach einem der Ansprüche 12 bis 17, bei welchem die Wärmebehandlung in einer durch eine Mischung von Sauerstoff und Butan erzeugten Flamme durchgeführt wird.

19. Verfahren nach einem der Ansprüche 12 bis 18, bei welchem der expandierte Graphit in situ in der Nähe des für seine direkte Verwendung vorgesehenen Ortes erzeugt wird und vorzugsweise durch die Verbrennungsgase auf der die zu absorbierende Flüssigkeit enthaltenden gewünschten Oberfläche verteilt wird.

20. Verwendung des expandierten Graphits, wie in einem der Ansprüche 1 bis 10 definiert, oder wie gemäß dem Verfahren nach einem der Ansprüche 11 bis 19 hergestellt, in Form von Granula eines Filtermediums, insbesondere zur Absorption von Erdöl-Produkten von Wasser- oder festen Oberflächen und Mineralsäuren von einer flüssigen oder festen Oberfläche.

21. Verwendung des expandierten Graphits nach Anspruch 20, wobei der expandierte Graphit durch die Verbrennungsgase auf der die zu absorbierende Flüssigkeit enthaltenden gewünschten Oberfläche verteilt wird.

## Revendications

1. Nouvelle forme structurale de graphite expansé qui possède une masse volumique apparente relativement élevée d'au moins 3 g/ml et qui contient des ions magnésium, qui peut être préparée par un procédé comprenant les étapes de:
(a)traitement d'un graphite naturel avec un mélange de solutions concentrées d'acide nitrique et d'acide sulfurique,
(b)lavage du graphite traité avec une solution aqueuse contenant des ions magnésium, et
(c)expansion du graphite traité obtenu dans l'étape (b) par un traitement thermique à une température d'au moins 1200°C.

2. Graphite expansé selon la revendication 1, où la teneur en ions magnésium est d'au moins 3% et de préférence comprise entre 3% et 30%, exprimée en masse d'ions magnésium par rapport à la masse de graphite expansé.

3. Graphite expansé selon l'une quelconque des revendications 1 et 2 où dans l'étape (a) le rapport en volume entre les acides est 4 pour l'acide sulfurique à 1 pour l'acide nitrique.

4. Graphite expansé selon l'une quelconque des revendications 1 à 3 où dans l'étape (a) une petite quantité d'un agent oxydant inorganique est incorporée.

5. Graphite expansé selon la revendication 4, où l'agent oxydant inorganique est l'oxyde de chrome.

6. Graphite expansé selon l'une quelconque des revendications 1 à 5 où dans l'étape (b) ledit lavage est accompli par une solution d'ions magnésium, de préférence de sulfate de magnésium, dans une gamme de concentration de 10% à 35% en masse.

7. Graphite expansé selon l'une quelconque des revendications 1 à 6 où après avoir été lavé le graphite traité a un pH dans la gamme de 6,5 à 6,9.

8. Graphite expansé selon l'une quelconque des revendications 1 à 7 où dans l'étape (c) le traitement thermique est accompli à une température d'environ 1600°C.

9. Graphite expansé selon la revendication 8 où ledit traitement thermique est accompli dans une flamme résultant d'un mélange d'oxygène et de butane.

10. Graphite expansé selon l'une quelconque des revendications 1 à 9, qui est produit sur site près de la zone envisagée pour son utilisation directe.

11. Procédé de préparation de graphite expansé ayant une masse volumique apparente relativement élevée d'au moins 3 g/ml et contenant des ions magnésium, comprenant les étapes de:
(a) traitement d'un graphite naturel avec un mélange de solutions concentrées d'acide nitrique et d'acide sulfurique,
(b) lavage du graphite traité avec une solution aqueuse contenant des ions magnésium, et
(c) expansion du graphite traité obtenu dans l'étape (b) par un traitement thermique à une température d'au moins 1200°C.

12. Procédé selon la revendication 11 où, dans l'étape (a) le rapport en volume entre les acides est 4 pour l'acide sulfurique à 1 pour l'acide nitrique.

13. Procédé selon la revendication 11 ou 12, où dans l'étape (a) une petite quantité d'un agent oxydant inorganique est incorporée.

14. Procédé selon la revendication 13 où l'agent oxydant inorganique est l'oxyde de chrome.

15. Procédé selon l'une quelconque des revendications 11 à 14, où dans l'étape (b) ledit lavage est accompli par une solution d'ions magnésium, de préférence de sulfate de magnésium, dans une gamme de concentration de 10% à 35% en masse.

16. Procédé selon l'une quelconque des revendications 11 à 15, où après avoir été lavé le graphite traité a un pH dans la gamme de 6,5 à 6,9.

17. Procédé selon l'une quelconque des revendications 11 à 16, où dans l'étape (c) le traitement thermique est accompli à une température d'environ 1600°C.

18. Procédé selon l'une quelconque des revendications 12 à 17, où ledit traitement thermique est accompli dans une flamme résultant d'un mélange d'oxygène et de butane.

19. Procédé selon l'une quelconque des revendications 12 à 18, où ledit graphite expansé est produit sur site près de la zone envisagée pour son emploi direct et de préférence est répandu par les gaz de combustion sur la surface désirée contenant le liquide à absorber.

20. Utilisation du graphite expansé tel que défini dans l'une quelconque des revendications 1 à 10, ou tel que préparé selon le procédé selon l'une quelconque des revendications 11 à 19 sous forme de granules, d'un milieu filtrant, notamment pour absorber des produits pétroliers depuis l'eau ou des surfaces solides, des acides minéraux depuis une surface liquide ou solide.

21. Utilisation du graphite expansé selon la revendication 20 où ledit graphite expansé est répandu par les gaz de combustion sur la surface désirée contenant le liquide à absorber.
